Europäisches Patentamt

European Patent Office

Office européen des brevets

(19)

(11) Publication number : **0 410 431 B1**

# EUROPEAN PATENT SPECIFICATION

(12)

(45) Date of publication of patent specification :
17.05.95 Bulletin 95/20

(51) Int. Cl.⁶ : **H01B 3/44**, C08L 23/08,
// C08F210:16

(21) Application number : 90114288.5

(22) Date of filing : 25.07.90

(54) **Tree resistant compositions.**

(30) Priority : 26.07.89 US 385702

(43) Date of publication of application :
30.01.91 Bulletin 91/05

(45) Publication of the grant of the patent :
17.05.95 Bulletin 95/20

(84) Designated Contracting States :
AT BE CH DE ES FR GB IT LI NL SE

(56) References cited :
EP-A- 0 341 621
EP-B- 0 004 647
EP-B- 0 120 501
GB-A- 2 034 723
JP-A- 5 999 613
JP-A- 6 388 707

(73) Proprietor : **UNION CARBIDE CHEMICALS
AND PLASTICS COMPANY, INC.**
**39 Old Ridgebury Road**
**Danbury Connecticut 06817-0001 (US)**

(72) Inventor : **Turbett, Robert John**
**1738 Long Hill Road**
**Millington, New Jersey 07946 (US)**
Inventor : **Barnabeo, Austin Emidio**
**533 Spring Valley Drive**
**Bridgewater, New Jersey 08807 (US)**
Inventor : **Marsden, Eric Paul**
**104 Mine Street**
**Flemington, New Jersey 08822 (US)**
Inventor : **Mendelsohn, Alfred**
**1467 East 13th Street**
**New York, New York 11230 (US)**
Inventor : **Umpleby, Jeffrey David**
**58 Le Prieuré**
**F-01210 Ferney-Voltaire (FR)**

(74) Representative : **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

EP 0 410 431 B1

## Description

This invention relates to compositions which are useful in low to high voltage insulation because of their resistance to water trees.

Power cables insulated with extruded dielectrics are known to suffer from shortened life when installed underground where water contact is likely. The shortened life has been attributed to the formation of water trees, which occur when an organic polymeric material is subjected to an electrical field over a long period of time in the presence of water in liquid or vapor form. The net result is a reduction in the dielectric strength of the insulation.

Many solutions have been proposed for increasing the resistance of organic insulating materials to degradation by water treeing. These include, for example, the addition to polyethylene of (i) a polar copolymer such as a copolymer of ethylene and vinyl acetate; (ii) a voltage stabilizer such as dodecanol; and (iii) a filler, e.g., clay. These solutions all have shortcomings of some kind such as an increase in dielectric loss, i.e., the power factor, volatility, or cost.

EP-A-296 355 discloses a heat and water tree resistant composition comprising an ethylene/alpha-olefin copolymer having a density not higher than 0.91 g/cm$^3$ and a polyethylene glycol in an amount of 0.1 to 20% by weight, based on the copolymer.

EP-A-341 621, a document relevant under Art. 54(3) EPC, describes a water-treeing resistant composition consisting of 70 to 99 parts by weight of an ethylene polymer and 1 to 30 parts by weight of an ethylene/$\alpha$-olefin copolymer having a density of from 0.890 to 0.915 and a crystalite melting point of from 90 to 125°C.

GB-A-20 34 723 relates to the preparation of copolymers of ethylene and a $C_{5-18}$ $\alpha$-olefin and optionally a diene having a density of 0.850 to 0.945 by polymerization in the vapor phase in the presence of a Ti- or V-based catalyst. The melt indices of almost all of the copolymers described in the examples are at least 1.1 and up to 6.4.

JP-A-63-88707 (Jap. Pat. Abstr., Derwent, 88-145239/21) is directed to electrical wires and cables having an electrically insulating layer consisting of a resin composition primarily constituted by an ethylene/$\alpha$-$C_{3-12}$-olefin copolymer having a density of 0.85 to 0.91 g/cm$^3$ and a melting point of at least 110°C. As stated in said document, there is no particular stipulation regarding the melt index of said copolymer although in view of the workability thereof it should fall within the range of 0.1 to 10.

An object of this invention is to provide a water tree resistant composition adapted for use in low to high voltage insulation, which does not depend on the use of modifying additives such as polar copolymers, voltage stabilizers, or fillers to achieve treeing resistance, and which will take advantage of the desirable electrical characteristics of "pure" polyethylene, for example, its low dissipation factor.

Other objects and advantages will become apparent hereinafter.

According to the present invention, the above object is met by a water tree resistant insulation composition consisting of:

(i)

(a) an ethylene copolymer having a density of not greater than 0.9105 gram per cubic centimeter and a melt index of not greater than 0.93 (determined according to ASTM D 1238, condition E) and produced by polymerizing, in the gas phase in a fluidized bed, a mixture of ethylene and 1-octene in the presence of a polymerization catalyst; or

(b) an ethylene copolymer according to paragraph (a) grafted with a hydrolyzable vinyl silane compound, wherein said polymerization catalyst is comprised of

(A) magnesium, titanium, halogen, and an electron donor together with one or more aluminum containing compounds; or

(B) vanadium, halogen, and an electron donor together with one or more aluminum containing compounds and, optionally, a lower haloalkane compound; and, optionally,

(ii) one or more additives selected from antioxidants, UV absorbers, antistatic agents, pigments, fillers, slip agents, fire retardants, stabilizers, cross-linking agents, halogen scavengers, smoke inhibitors, cross-linking boosters, processing aids, lubricants, plasticizers and viscosity control agents.

With respect to the titanium containing catalyst system employed in the present invention, the comonomers are contacted with a catalyst system containing a catalyst precursor comprising magnesium, titanium, a halogen, and an electron donor as well as one or more aluminum containing compounds (cocatalyst) such as triethylaluminum and triisobutylaluminum. The catalyst system and the preparation of the copolymer are described in US-A-4,302,565.

The copolymer produced in the presence of the titanium containing catalyst system can be prepared as follows: Into a flask equipped with a mechanical stirrer are placed anhydrous MgCl$_2$ and tetrahydrofuran (THF).

To this mixture, $TiCl_4$ is added. Porous dehydrated silica is added to the solution and stirred. The mixture is dried to provide a dry, free-flowing powder having the particle size of the silica. The desired weight of impregnated precursor composition and activator compound, e.g., triethylaluminum, is added to a mixing tank with a sufficient amount of anhydrous aliphatic hydrocarbon diluent such as isopentane to provide a slurry system. The activator compound and precursor compound are used in such amounts as to provide a partially activated precursor composition which has an Al/Ti ratio of up to 10:1. The contents of the slurry system are then mixed and dried. The resulting catalyst is in the form of a partially activated precursor composition which is impregnated within the pores of the silica. It is injected into, and fully activated within, the polymerization reactor. Activator compound is added to the polymerization reactor so as to maintain the Al/Ti ratio in the reactor at a level of about 10:1 to 400:1. The copolymerization is then carried out.

With regard to the vanadium containing catalyst system, the comonomers are preferably contacted with a supported catalyst system containing a catalyst precursor comprising a vanadium trihalide, an electron donor, and a hydrocarbyl aluminum halide together with a hydrocarbyl aluminum cocatalyst and a halogen substituted lower alkane promoter, the lower alkane promoter having 1 to 7 carbon atoms. The halogen in the vanadium trihalide is chlorine, bromine or iodine, or mixtures thereof. The electron donor is a liquid, organic Lewis base in which the vanadium trihalide is soluble. The electron donor is selected from alkyl esters of aliphatic and aromatic carboxylic acids, aliphatic esters, aliphatic ketones, aliphatic amines, aliphatic alcohols, alkyl and cycloalkyl ethers, and mixtures thereof. Preferred electron donors are alkyl and cycloalkyl ethers, including particularly tetrahydrofuran. The modifier used in the precursor preferably includes $C_1$ to $C_6$ alkylaluminum mono- and di- chlorides. A particularly preferred modifier is diethyl aluminum chloride. The carrier is solid, particulate porous material inert to the polymerization. The carrier consists essentially of silica or alumina, i.e., oxides of silicon or aluminium or mixtures thereof. Optionally, the carrier may contain additional materials such as zirconia, thoria or other compounds chemically inert to the polymerization or mixtures thereof. The cocatalyst preferably includes $C_2$ to $C_8$ trialkylaluminum compounds. A particularly preferred cocatalyst is triisobutyl aluminum. The promoter preferably is a fluoro, chloro or bromo substituted ethane or methane having at least 2 halogens attached to a carbon atom. Preferred promoters include $CCl_4$, $CHCl_3$, $CH_2Cl_2$, $CBr_4$, $CFCl_3$, $CH_3CCl_3$, and $CF_2ClCCl_3$. Particularly preferred promoters are methylene dichloride ($CH_2Cl_2$), 1,1,1-trichloroethane, ($CH_3CCl_3$), and chloroform ($CHCl_3$). The catalyst system and a process for preparing the copolymer are described in EP-A-120 501.

The copolymer produced in the presence of the vanadium containing catalyst system can be prepared as follows: To a flask containing anhydrous tetrahydrofuran is added $VCl_3$. The mixture is stirred until the $VCl_3$ is dissolved. To this solution is added dehydrated silica and stirring is continued. The flask is vented and the solution is dried to the mud stage. The impregnated silica is a free-flowing solid which has 0.25 millimole of vanadium per gram. The solid is removed from the flask and stored under nitrogen. Then, the modifier is introduced using the following procedure. To a flask containing anhydrous isopentane is added the impregnated silica described above. To this mixture is added with stirring, diethylaluminum chloride, as modifier, in anhydrous hexane. The amount of modifier is employed in an amount sufficient to provide 1.7 mole of modifier per mole of tetrahydrofuran. This mixture is heated until the product is a free-flowing powder. The vanadium precursor is then removed from the flask and stored under nitrogen. The ethylene copolymer is produced in the gas phase in a fluidized bed reactor under the following operating conditions: promoter/cocatalyst molar ratio: 1.0; aluminum/vanadium atomic ratio: 40; temperature: 70°C; gas velocity: 0.45 m (1.5 feet) per second; nitrogen pressure (mole percent): 50; comonomer/ethylene molar ratio: 0.24; hydrogen/ethylene molar ratio: 0.007; and $kg/h \cdot m^3$ (pounds/hour-cubic feet): 245 (4.7). Trisobutylaluminum cocatalyst is added during polymerization. Chloroform, $CHCl_3$, is added as the promoter as a 5 weight percent solution in isopentane. The polymerization is conducted for more than one hour after equilibrium is reached under a pressure of about 2.1 MPa gauge (300 psig).

The amount of 1-octene is preferably in the range of 5 to 50 percent by weight based on the weight of the copolymer and is most preferably in the range of 15 to 40 percent by weight. The amount of ethylene is preferably greater than 50 percent by weight and is preferably more than 60 percent by weight.

The density of the ethylene/1-octene copolymer is no greater than 0.9105 gram per cubic centimeter and is preferably in the range of 0.88 to 0.9105 gram per cubic centimeter. The melt index is preferably in the range of 0.5 to 0.93 grams per ten minutes. Melt index is determined in accordance with ASTM D-1238, Condition E, and is measured at 190°C.

Various processes for preparing silane grafted polyethylene and ethylene/silane copolymers and numerous unsaturated silanes suitable for use in preparing these polymers and bearing hydrolyzable groups such as alkoxy, oxy aryl, oxyaliphatic, and halogen are mentioned in US-A-3,075,948; 3,225,018; 4,412,042; 4,413,066; 4,574,133; and 4,593,071. In the silane grafted copolymer, the amount of incorporated silane monomer is preferably from 0.5 percent to 10 percent by weight based on the total weight of the copolymer. The silane grafted to the copolymer can be, among others, a vinyl trialkoxy silane such as vinyl trimethoxy silane or vinyl triethoxy silane. Generally speaking, any unsaturated monomeric silane containing at least one hydrolyzable group can be used. If slower water cure or better shelf stability are desired, vinyl triisobutoxy silane, vinyl tris-(2-ethyl-hexoxy) silane or vinyl trisopropoxy silane can be used.

A free radical generator or catalyst is used in the preparation of the silane grafted polymer. Among the most useful free radical generators are dicumyl peroxide, lauroyl peroxide, azobisisobutyronitrile, benzoyl peroxide, tertiary butyl perbenzoate, di(tertiary-butyl) peroxide, cumene hydroperoxide, 2,5-dimethyl-2,5-di(t-butylperoxy) hexane, 2,5-dimethyl-2,5-di(t-butylperoxy)-hexane tertiary butyl hydroperoxide, and isopropyl percarbonate. The organic peroxides are preferred. 0.01 to 5 percent by weight of free radical generator based on the weight of the copolymer is used, and preferably 0.01 to 0.1 percent by weight.

The organic peroxides are also used to cross-link or cure the ethylene/1-octene copolymers. The hydrolyzable silane grafted copolymer can be cross-linked using an organic peroxide or with moisture in the presence of a conventional silanol condensation catalyst such as dibutyl tin dilaurate. The amount of organic peroxide used for cross-linking is in the range of 0.5 to 5 percent by weight based on the weight of the copolymer.

The various conventional additives given above under (ii) can be added in conventional amounts to the insulation compositions.

Wire and cable is generally constructed of one or more metal conductors insulated with a polymeric material. In cable, these elements form a core and are protected by another polymeric sheath or jacket material. In certain cases, added protection is afforded by inserting a wrap between the core and the sheath. Subject composition is typically used as the insulating or jacketing layer, and is coated on or extruded about the electrical conductor. The hydrolyzable composition is generally cross-linked after it is in place on the wire or cable.

The invention is illustrated by the following examples.

Examples 1 to 7

The resistance of insulating compositions to water treeing is determined by the method described in US-A-4,144,202. This measurement leads to a value for water treeing resistance relative to a standard polyethylene insulating material. The term used for the value is "water tree growth rate" (WTGR). From experience in laboratory tests of materials and for accelerated tests of cables, it has been established that the value for WTGR should be equal to or less than about 10 percent of the standard to provide a useful improvement in cable performance, i.e., in the life of a cable which is in service and in contact with water during the period of service.

The compositions of examples 1 to 3 and 5 to 7 are based on ethylene/l-octene copolymers and are prepared by a gas phase process similar to the typical procedure for titanium based catalysts, mentioned above. The compositions of examples 4 and 6 are also based on ethylene/l-octene copolymers and are prepared by a gas phase process similar to the typical procedure for vanadium based catalysts, mentioned above. The copolymers contain antioxidant, calcium stearate, and dicumyl peroxide as the cross-linking agent. All specimens are compression molded, cured, i.e., cross-linked, in the press, and vacuum treated for seven days at 80°C prior to testing. Variables and results are set forth below.

| Example | 1 | 2 | 3* | 4 | 5 | 5* | 7* |
|---|---|---|---|---|---|---|---|
| density (g/cc) | 0.8995 | 0.9018 | 0.9050 | 0.9060 | 0.9105 | 0.9110 | 0.9165 |
| melt index | 0.73 | 0.40 | 1.08 | 0.28 | 0.93 | 0.42 | 1.2 |
| WTGR (%) | 0.20 | 0.05 | 3.0 | 0.60 | 0.2 | 3.5 | 3.9 |

* = comparative

Example 8 (comparative)

The procedure of example 3 is repeated except that it is not cross-linked. The density is 0.905 gram per cubic centimeter; the melt index is 1.08 grams per 10 minutes; and the WTGR (%) is 6.4.

Examples 9 and 10 (comparative)

The procedure of example 1 is repeated except that the copolymer is prepared in the solution phase.

| Example | 1 | 2 |
|---|---|---|
| density (g/cc) | 0.905 | 0.912 |
| melt index | 0.9 | 1.0 |
| WTGR (%) | 16.0 | 8.8 |

**Claims**

1. A water tree resistant insulation composition consisting of:
   (i)
     (a) an ethylene copolymer having a density of not greater than 0.9105 gram per cubic centimeter and a melt index of not greater than 0.93 (determined according to ASTM D 1238, condition E) and produced by polymerizing, in the gas phase in a fluidized bed, a mixture of ethylene and 1-octene in the presence of a polymerization catalyst; or
     (b) an ethylene copolymer according to paragraph (a) grafted with a hydrolyzable vinyl silane compound, wherein said polymerization catalyst is comprised of
       (A) magnesium, titanium, halogen, and an electron donor together with one or more aluminum containing compounds; or
       (B) vanadium, halogen, and an electron donor together with one or more aluminum containing compounds and, optionally, a lower haloalkane compound; and, optionally,
   (ii) one or more additives selected from antioxidants, UV absorbers, antistatic agents, pigments, fillers, slip agents, fire retardants, stabilizers, cross-linking agents, halogen scavengers, smoke inhibitors, cross-linking boosters, processing aids, lubricants, plasticizers and viscosity control agents.

2. The composition defined in claim 1, wherein the copolymer of (a) has been produced by contacting the comonomers, under polymerization conditions, with (i) a catalyst system containing a catalyst precursor comprising magnesium, titanium, a halogen, and an electron donor, and a hydrocarbyl aluminum cocatalyst or (ii) a catalyst system containing a catalyst precursor comprising vanadium, an electron donor, and a hydrocarbyl aluminum halide; a hydrocarbyl aluminum cocatalyst; and a halogen substituted lower alkane promoter.

3. The composition defined in claim 2 wherein the copolymer is cross-linked.

4. The composition defined in at least one of the claims 2-3 wherein the density is no less than 0.88 gram per cubic centimeter.

5. The composition defined in at least one of the claims 2-4 wherein the portion of the copolymer attributed to 1-octene is in the range of 5 to 50 percent by weight based on the weight of the copolymer.

6. An electrical conductor coated with, or having extruded thereon, a cross-linked water tree resistant insulation composition consisting of:
   (i)
     (a) an ethylene copolymer having a density of not greater than 0.9105 gram per cubic centimeter and a melt index of not greater than 0.93 (determined according to ASTM D 1238, condition E) and produced by polymerizing, in the gas phase in a fluidized bed, a mixture of ethylene and 1-octene in the presence of a polymerization catalyst; or
     (b) an ethylene copolymer according to paragraph (a) grafted with a hydrolyzable vinyl silane compound, wherein said polymerization catalyst is comprised of
       (A) magnesium, titanium, halogen, and an electron donor together with one or more aluminum containing compounds; or
       (B) vanadium, halogen, and an electron donor together with one or more aluminum containing compounds and, optionally, a lower haloalkane compound; and, optionally,
   (ii) one or more additives selected from antioxidants, UV absorbers, antistatic agents, pigments, fillers, slip agents, fire retardants, stabilizers, cross-linking agents, halogen scavengers, smoke inhibitors, cross-linking boosters, processing aids, lubricants, plasticizers and viscosity control agents.

7. A cable comprising a metal core conductor and at least one layer surrounding the core comprising a water tree resistant insulation composition consisting of:

(i)

(a) an ethylene copolymer having a density of not greater than 0.9105 gram per cubic centimeter and a melt index of not greater than 0.93 (determined according to ASTM D 1238, condition E) and produced by polymerizing, in the gas phase in a fluidized bed, a mixture of ethylene and 1-octene in the presence of a polymerization catalyst; or

(b) an ethylene copolymer according to paragraph (a) grafted with a hydrolyzable vinyl silane compound, wherein said polymerization catalyst is comprised of

(A) magnesium, titanium, halogen, and an electron donor together with one or more aluminum containing compounds; or

(B) vanadium, halogen, and an electron donor together with one or more aluminum containing compounds and, optionally, a lower haloalkane compound; and, optionally,

(ii) one or more additives selected from antioxidants, UV absorbers, antistatic agents, pigments, fillers, slip agents, fire retardants, stabilizers, cross-linking agents, halogen scavengers, smoke inhibitors, cross-linking boosters, processing aids, lubricants, plasticizers and viscosity control agents,

wherein the copolymer of (a) is cross-linked and has been produced by contacting the comonomers, under polymerization conditions, with (i) a catalyst system containing a catalyst precursor comprising magnesium, titanium, a halogen, and an electron donor, and a hydrocarbyl aluminium cocatalyst or (ii) a catalyst system containing a catalyst precursor comprising vanadium, an electron donor, and a hydrocarbyl aluminium halide; a hydrocarbyl aluminium cocatalyst; and a halogen substituted lower alkane promoter.

8. The cable of claim 7, wherein the composition has a density no less than 0.88 gram per cubic centimeter.

9. The cable of any one of claims 7 and 8, wherein the portion of the copolymer attributed to 1-octene is in the range of 5 to 50 percent by weight based on the weight of the copolymer.

## Patentansprüche

1. Gegen Teilentladungskanalbildung widerstandfähige Isolierzusammensetzung, bestehend aus:

(i)

(a) einem Ethylen-Copolymer mit einer Dichte von nicht mehr als 0,9105 g pro $cm^3$ und einem Schmelzindex von nicht mehr als 0,93 (bestimmt nach ASTM-D-1238, Bedingung E) und hergestellt durch Polymerisation in der Gasphase in einem Wirbelbett einer Mischung aus Ethylen und 1-Octen in Anwesenheit eines Polymerisationskatalysators; oder

(b) einem Ethylen-Copolymer nach (a), mit einer aufgepfropften hydrolysierbaren Vinylsilanverbindung, wobei der genannte Polymerisationskatalysator zusammengesetzt ist aus

(A) Magnesium, Titan, Halogen und einem Elektronendonator zusammen mit einer oder mehreren Aluminium-enthaltenden Verbindungen; oder

(B) Vanadium, Halogen und einem Elektronendonator zusammen mit einer oder mehreren Aluminium-enthaltenden Verbindungen und, gegebenenfalls, einer niederen Halogenalkanverbindung; und gegebenenfalls

(ii) einem oder mehreren Additiven, ausgewählt aus Antioxidationsmitteln, UV-Absorptionsmitteln, Antistatikmitteln Pigmenten, Füllmitteln, Gleitmitteln, feuerhemmenden Mitteln, Stabilisatoren, Vernetzungsmitteln, Halogenradikalfängern, Rauchunterdrückungsmitteln , Vernetzungsverstärkern, Verarbeitungshilfsmitteln, Schmiermitteln, Weichmachern und Viskositätssteuerungsmitteln.

2. Zusammensetzung nach Anspruch 1, worin das Copolymer nach (a) hergestellt wurde durch Kontaktieren unter Polymerisationsbedingungen der Comonomeren mit (i) einem Katalysatorsystem, das einen Katalysatorvorläufer, der Magnesium, Titan, ein Halogen und einen Elektronendonator umfaßt und einen Hydrocarbylaluminium-Cokatalysator enthält, oder (ii) einem Katalysatorsystem, das einen Katalysatorvorläufer, der Vanadium, einen Elektronendonator und ein Hydrocarbylaluminiumhalogenid umfaßt; und einen Hydrocarbylaluminium-Cokatalysator und einen Halogen-substituierten niederen Alkan-Promotor enthält.

3.  Zusammensetzung nach Anspruch 2, worin das Copolymer vernetzt ist.

4.  Zusammensetzung nach wenigstens einem der Ansprüche 2 - 3, worin die Dichte nicht kleiner als 0,88 g pro cm³ ist.

5.  Zusammensetzung nach wenigstens einem der Ansprüche 2 - 4, worin der Anteil des Copolymers, der auf 1-Octen beruht, im Bereich von 5 bis 50 Gew.-%, bezogen auf das Gewicht des Copolymers, liegt.

6.  Elektrischer Leiter, der mit einer vernetzten, gegen Teilentladungskanalbildung resistenten Isolierzusammensetzung beschichtet ist oder wobei die Zusammensetzung auf den Leiter extrudiert wurde, welche besteht aus:
    (i)
    (a) einem Ethylen-Copolymer mit einer Dichte von nicht mehr als 0,9105 g pro cm³ und einem Schmelzindex von nicht mehr als 0,93 (bestimmt nach ASTM-D-1238, Bedingung E) und hergestellt durch Polymerisation in der Gasphase in einem Wirbelbett einer Mischung aus Ethylen und 1-Octen in Anwesenheit eines Polymerisationskatalysators; oder
    (b) einem Ethylen-Copolymer nach (a), mit einer aufgepfropften hydrolysierbaren Vinylsilanverbindung, wobei der genannte Polymerisationskatalysator zusammengesetzt ist aus
    (A) Magnesium, Titan, Halogen und einem Elektronendonator zusammen mit einer oder mehreren Aluminium-enthaltenden Verbindungen; oder
    (B) Vanadium, Halogen und einem Elektronendonator zusammen mit einer oder mehreren Aluminium-enthaltenden Verbindungen und, gegebenenfalls, einer niederen Halogenalkanverbindung; und gegebenenfalls
    (ii) einem oder mehreren Additiven, ausgewählt aus Antioxidationsmitteln, UV-Absorptionsmitteln, Antistatikmitteln, Pigmenten, Füllmitteln, Gleitmitteln, feuerhemmenden Mitteln, Stabilisatoren, Vernetzungsmitteln, Halogenradikalfängern, Rauchunterdrückungsmitteln, Vernetzungsverstärkern, Verarbeitungshilfsmitteln, Schmiermitteln, Weichmachern und Viskositätssteuerungsmitteln.

7.  Kabel, das einen Metallkern und wenigstens eine den Kern umgebende Schicht umfaßt, welche eine gegen Teilentladungskanalbildung resistente Isolierzusammensetzung umfaßt, bestehend aus:
    (i)
    (a) einem Ethylen-Copolymer mit einer Dichte von nicht mehr als 0,9105 g pro cm³ und einem Schmelzindex von nicht mehr als 0,93 (bestimmt nach ASTM-D-1238, Bedingung E) und hergestellt durch Polymerisation in der Gasphase in einem Wirbelbett einer Mischung aus Ethylen und 1-Octen in Anwesenheit eines Polymerisationskatalysators; oder
    (b) einem Ethylen-Copolymer nach (a) mit einer aufgepfropften hydrolysierbaren Vinylsilanverbindung, wobei der genannte Polymerisationskatalysator zusammengesetzt ist aus
    (A) Magnesium, Titan, Halogen und einem Elektronendonator zusammen mit einer oder mehreren Aluminium-enthaltenden Verbindungen; oder
    (B) Vanadium, Halogen und einem Elektronendonator zusammen mit einer oder mehreren Aluminium-enthaltenden Verbindungen und, gegebenenfalls, einer niederen Halogenalkanverbindung; und gegebenenfalls
    (ii) einem oder mehreren Additiven, ausgewählt aus Antioxidationsmitteln, UV-Absorptionsmitteln, Antistatikmitteln, Pigmenten, Füllmitteln, Gleitmitteln, feuerhemmenden Mitteln, Stabilisatoren, Vernetzungsmitteln, Halogen-radikalfängern, Rauchunterdrückungsmitteln, Vernetzungs-verstärkern, Verarbeitungshilfsmitteln, Schmiermitteln, Weichmachern und Viskositätssteuerungsmitteln,
    worin das Copolymer nach (a) vernetzt ist und hergestellt wurde durch Kontaktieren unter Polymerisationsbedingungen der Comonomeren mit (i) einem Katalysatorsystem, das einen Katalysatorvorläufer, der Magnesium, Titan, ein Halogen und einen Elektronendonator umfaßt und einen Hydrocarbylaluminium-Cokatalysator enthält oder (ii) einem Katalysatorsystem, das einen Katalysatorvorläufer, der Vanadium, einen Elektronendonator und ein Hydrocarbylaluminiumhalogenid umfaßt; und das einen Hydrocarbylaluminium-Cokatalystor und einen Halogen-substituierten niederen Alkan-Promotor enthält.

8.  Kabel nach Anspruch 7, worin die Zusammensetzung eine Dichte von nicht kleiner als 0,88 g pro cm³ hat.

9.  Kabel nach einem der Ansprüch 7 oder 8, worin der Anteil des Copolymers, das auf 1-Octen beruht, im Bereich von 5 bis 50 Gew.-%, bezogen auf das Gewicht des Copolymers, liegt.

7

**Revendications**

1. Composition d'isolant résistant à la formation d'arborescences d'eau, consistant en :
   (i)
   (a) un copolymère d'éthylène ayant une masse volumique non supérieure à 0,9105 gramme par centimètre cube et un indice de fluidité non supérieur à 0,93 (déterminé suivant la norme ASTM D1238, condition E) et produit par polymérisation, en phase gazeuse dans un lit fluidisé, d'un mélange d'éthylène et de 1-octène en présence d'un catalyseur de polymérisation ; ou
   (b) un copolymère d'éthylène conforme au paragraphe (a) greffé avec un vinylsilane hydrolysable, ledit catalyseur de polymérisation étant constitué
   (A) de magnésium, de titane, d'un halogène et d'un donneur d'électrons en association avec un ou plusieurs composés contenant de l'aluminium ; ou
   (B) de vanadium, d'un halogène et d'un donneur d'électrons en association avec un ou plusieurs composés contenant de l'aluminium et, facultativement, un halogénalcane inférieur ; et, facultativement,
   (ii) un ou plusieurs additifs choisis entre des antioxydants, des agents absorbant le rayonnement UV, des agents anti-statiques, des pigments, des charges, des agents de glissement, des retardateurs de flamme, des stabilisants, des agents de réticulation, des accepteurs d'halogènes, des inhibiteurs de fumée, des accélérateurs de réticulation, des adjuvants de traitement, des lubrifiants, des plastifiants, et des agents de régulation de viscosité.

2. Composition suivant la revendication 1, dans laquelle le copolymère du paragraphe (a) a été produit par mise en contact des comonomères, dans des conditions de polymérisation, avec (i) une formulation de catalyseur contenant un précurseur de catalyseur comprenant du magnésium, du titane, un halogène et un donneur d'électrons, ainsi qu'un cocatalyseur du type hydrocarbylaluminium ou (ii) une formulation de catalyseur contenant un précurseur de catalyseur comprenant du vanadium, un donneur d'électrons et un halogénure d'hydrocarbylaluminium ; un cocatalyseur du type hydrocarbylaluminium ; et un promoteur consistant en un alcane inférieur à substituant halogéno.

3. Composition suivant la revendication 2, dans laquelle le copolymère est réticulé.

4. Composition suivant au moins une des revendications 2 et 3, dans lequel la masse volumique est non inférieure à 0,88 gramme par centimètre cube.

5. Composition suivant au moins une des revendications 2 à 4, dans laquelle la portion du copolymère attribuée au 1-octène est comprise dans l'intervalle de 5 à 50 % en poids sur la base du poids du copolymère.

6. Conducteur électrique revêtu avec, ou sur lequel a été extrudée, une composition d'isolant réticulée résistant à la formation d'arborescences d'eau, consistant en :
   (i)
   (a) un copolymère d'éthylène ayant une masse volumique non supérieure à 0,9105 gramme par centimètre cube et un indice de fluidité non supérieur à 0,93 (déterminé suivant la norme ASTM D1238, condition E) et produit par polymérisation, en phase gazeuse dans un lit fluidisé, d'un mélange d'éthylène et de 1-octène en présence d'un catalyseur de polymérisation ; ou
   (b) un copolymère d'éthylène conforme au paragraphe (a) greffé avec un vinylsilane hydrolysable, ledit catalyseur de polymérisation étant constitué
   (A) de magnésium, de titane, d'un halogène et d'un donneur d'électrons en association avec un ou plusieurs composés contenant de l'aluminium ; ou
   (B) de vanadium, d'un halogène et d'un donneur d'électrons en association avec un ou plusieurs composés contenant de l'aluminium et, facultativement, un halogénalcane inférieur ; et, facultativement,
   (ii) un ou plusieurs additifs choisis entre des antioxydants, des agents absorbant le rayonnement UV, des agents anti-statiques, des pigments, des charges, des agents de glissement, des retardateurs de flamme, des stabilisants, des agents de réticulation, des accepteurs d'halogènes, des inhibiteurs de fumée, des accélérateurs de réticulation, des adjuvants de traitement, des lubrifiants, des plastifiants, et des agents de régulation de viscosité.

7. Câble comprenant une âme conductrice métallique et au moins une couche entourant l'âme comprenant une composition d'isolant résistant à la formation d'arborescences d'eau consistant en :

(i)

(a) un copolymère d'éthylène ayant une masse volumique non supérieure à 0,9105 gramme par centimètre cube et un indice de fluidité non supérieur à 0,93 (déterminé suivant la norme ASTM D1238, condition E) et produit par polymérisation, en phase gazeuse dans un lit fluidisé, d'un mélange d'éthylène et de 1-octène en présence d'un catalyseur de polymérisation ; ou

(b) un copolymère d'éthylène conforme au paragraphe (a) greffé avec un vinylsilane hydrolysable, ledit catalyseur de polymérisation étant constitué

(A) de magnésium, de titane, d'un halogène et d'un donneur d'électrons en association avec un ou plusieurs composés contenant de l'aluminium ; ou

(B) de vanadium, d'un halogène et d'un donneur d'électrons en association avec un ou plusieurs composés contenant de l'aluminium et, facultativement, un halogénalcane inférieur ; et, facultativement,

(ii) un ou plusieurs additifs choisis entre des antioxydants, des agents absorbant le rayonnement UV, des agents anti-statiques, des pigments, des charges, des agents de glissement, des retardateurs de flamme, des stabilisants, des agents de réticulation, des accepteurs d'halogènes, des inhibiteurs de fumée, des accélérateurs de réticulation, des adjuvants de traitement, des lubrifiants, des plastifiants, et des agents de régulation de viscosité,

dans lequel le copolymère du paragraphe (a) est réticulé et a été produit par mise en contact des monomères, dans des conditions de polymérisation, avec (i) une formulation de catalyseur contenant un précurseur de catalyseur comprenant du magnésium, du titane, un halogène et un donneur d'électrons, et un cocatalyseur du type hydrocarbylaluminium, ou (ii) une formulation de catalyseur contenant un précurseur de catalyseur comprenant du vanadium, un donneur d'électrons et un halogénure d'hydrocarbylaluminium ; un cocatalyseur du type hydrocarbylaluminium ; et un promoteur consistant en un alcane inférieur à substituant halogéno.

**8.** Câble suivant la revendication 7, dans lequel la composition a une masse volumique non inférieure à 0,88 gramme par centimètre cube.

**9.** Câble suivant l'une quelconque des revendications 7 et 8, dans lequel la portion du copolymère attribué au 1-octène est comprise dans l'intervalle de 5 à 50 % en poids sur la base du poids du copolymère.